# EUROPEAN PATENT APPLICATION

(11) **EP 3 644 423 A1**
(43) Date of publication of application: **29.04.2020**
(21) Application number: 18820632.0
(22) Date of filing: 17.05.2018
(51) Int. Cl.: H01M 8/1213, C04B 35/486, C04B 35/50, C25B 1/10, C25B 9/00, C25B 9/10, C25B 9/18, C25B 11/04, C25B 11/06, H01M 4/86, H01M 8/12

(54) **ELECTROCHEMICAL CELL AND ELECTROCHEMICAL STACK**

(30) Priority: 21.06.2017 JP 2017121545
(71) Applicant: NGK Spark Plug Co., Ltd., Nagoya-shi, Aichi 467-8525 (JP)
(72) Inventor: YAMADA Keisuke, Nagoya-shi Aichi 467-8525 (JP); FUNAHASHI Yoshihiro, Nagoya-shi Aichi 467-8525 (JP); YAMAGIWA Katsuya, Nagoya-shi Aichi 467-8525 (JP)
(74) Representative: J A Kemp LLP
(86) International application number: PCT/JP2018/019043
(87) International publication number: WO 2018/235467

(57) **Abstract**

To prevent impairment of the performance of a cell, which would otherwise occur due to a difference in amount of expansion between a solid electrolyte layer and an anode in a reducing atmosphere, or elemental interdiffusion between the solid electrolyte layer and the anode. An electrochemical cell includes a solid electrolyte layer containing ZrO₂ containing a first rare earth element; a cathode disposed on one side of the solid electrolyte layer; and an anode disposed on the other side of the solid electrolyte layer. The anode contains CeO₂ containing a second rare earth element and Ni or an Ni-containing alloy. The electrochemical cell further includes an intermediate layer disposed between the solid electrolyte layer and the anode. The intermediate layer contains a solid solution containing Zr, Ce, the first rare earth element, and the second rare earth element.

## Description

### TECHNICAL FIELD

A technique disclosed in the present specification relates to an electrochemical cell.

### BACKGROUND ART

A known type of a fuel cell for generating electricity by utilizing electrochemical reaction between hydrogen and oxygen is a solid oxide fuel cell (hereinafter may be referred to as "SOFC"). A constitutive unit of SOFC (i.e., a cell) includes a solid electrolyte layer, a cathode disposed on one side of the solid electrolyte layer, and an anode disposed on the other side of the solid electrolyte layer.

The solid electrolyte layer is formed so as to contain, for example, ZrO₂ (zirconia) containing a rare earth element such as Y (yttrium). The anode is formed so as to contain, for example, ZrO₂ containing a rare earth element such as Y and Ni or an Ni-containing alloy.

There has been known a technique for forming an anode so as to contain CeO₂ (ceria) containing a rare earth element such as Gd (gadolinium) instead of the aforementioned rare earth element-containing ZrO₂ (see, for example, Patent Document 1). In general, a CeO₂ material has ion conductivity higher than that of a ZrO₂ material. Thus, when the anode is formed of CeO₂ containing a rare earth element, the resultant cell exhibits improved performance.

### PRIOR ART DOCUMENT

### PATENT DOCUMENT

Patent Document 1: Japanese Patent Application Laid-Open (*kokai*) No. 2003-288912

### SUMMARY OF THE INVENTION

### PROBLEM TO BE SOLVED BY THE INVENTION

Meanwhile, a CeO₂ material has an expansion coefficient higher than that of a ZrO₂ material in a reducing atmosphere. Thus, when the solid electrolyte layer contains ZrO₂ containing a rare earth element, and the anode is formed of CeO₂ containing a rare earth element, a large difference in amount of expansion between the solid electrolyte layer and the anode in a reducing atmosphere may cause separation between the solid electrolyte layer and the anode, resulting in impairment of the performance of the resultant cell.

When the solid electrolyte layer contains ZrO₂ containing a rare earth element, and the anode is formed of CeO₂ containing a rare earth element, elemental interdiffusion may occur between the solid electrolyte layer and the anode, resulting in impairment of the performance of the resultant cell.

Patent Document 1 describes provision of an intermediate layer between the solid electrolyte layer and the anode, wherein the intermediate layer contains a mixture of an ion conductive oxide (ZrO₂ containing a rare earth element) contained in the solid electrolyte layer and an ion conductive oxide (CeO₂ containing a rare earth element) contained in the anode. However, this configuration causes a large difference in amount of expansion between rare earth element-containing ZrO₂ grains forming the intermediate layer and rare earth element-containing CeO₂ grains forming the intermediate layer in a reducing atmosphere. Thus, this configuration may cause occurrence of cracks at grain boundaries within the intermediate layer in a reducing atmosphere, resulting in impairment of the performance of the resultant cell.

Such a problem is common with a solid oxide electrolysis cell (hereinafter may be referred to as "SOEC") for generating hydrogen by utilizing the electrolysis of water. In the present specification, a cell for SOFC and a cell for SOEC are collectively referred to as an "electrochemical cell," and an SOFC stack including a plurality of cells for SOFC and an SOEC stack including a plurality of cells for SOEC are collectively referred to as an "electrochemical stack."

The present specification discloses a technique capable of solving the aforementioned problems.

### MEANS FOR SOLVING THE PROBLEM

The technique disclosed in the present specification can be implemented in, for example, the following modes.
(1) An electrochemical cell disclosed in the present specification comprises: a solid electrolyte layer containing ZrO₂ containing a first rare earth element; a cathode disposed on one side of the solid electrolyte layer; and an anode disposed on the other side of the solid electrolyte layer and containing CeO₂ containing a second rare earth element and Ni or an Ni-containing alloy, the electrochemical cell further comprising an intermediate layer disposed between the solid electrolyte layer and the anode and containing a solid solution containing Zr (zirconium), Ce (cerium), the first rare earth element, and the second rare earth element. According to the present electrochemical cell, the amount of expansion of the intermediate layer in a reducing atmosphere can be controlled to fall within a range between the amount of expansion of the anode and the amount of expansion of the solid electrolyte layer. This configuration can reduce the stress between the anode and the solid electrolyte layer caused by a difference in amount of expansion therebetween in a reducing atmosphere, and can prevent separation between the anode and the solid electrolyte layer, to thereby prevent impairment of the performance of the electrochemical cell, which would otherwise occur due to the separation. In the present electrochemical cell, the intermediate layer contains Zr, Ce, the first rare earth element (i.e., the same rare earth element as that contained in the solid electrolyte layer), and the second rare earth element (i.e., the same rare earth element as that contained in the anode). Thus, the presence of the intermediate layer can prevent elemental interdiffusion between the anode and the solid electrolyte layer, to thereby prevent impairment of the performance of the present electrochemical cell, which would otherwise occur due to poor properties caused by elemental interdiffusion between the anode and the solid electrolyte layer. In the present electrochemical cell, the intermediate layer does not contain a mixture of Zr (zirconium), Ce (cerium), the first rare earth element, and the second rare earth element, but contains a solid solution containing Zr, Ce, the first rare earth element, and the second rare earth element. Thus, in a reducing atmosphere, the difference in amount of expansion between grains forming the intermediate layer can be reduced. Therefore, the configuration of the present electrochemical cell can prevent occurrence of cracks caused by a difference in amount of expansion between grains forming the intermediate layer, to thereby prevent impairment of the performance of the electrochemical cell, which would otherwise occur due to the cracks.
(2) In the above-described electrochemical cell, in the intermediate layer, the total amount of Zr and Ce may be 30 at% or more relative to the total amount of Zr, Ce, the first rare earth element, and the second rare earth element. When the total amount of Zr and Ce is excessively small in the intermediate layer, the intermediate layer may fail to maintain a fluorite crystal structure, leading to a reduction in the ion conductivity of the intermediate layer, resulting in impairment of the performance of the electrochemical cell. According to the present electrochemical cell, an excessive decrease in the total amount of Zr and Ce can be avoided in the intermediate layer. Thus, the intermediate layer can maintain a fluorite crystal structure, to thereby prevent impairment of the performance of the electrochemical cell, which would otherwise occur due to a reduction in the ion conductivity of the intermediate layer.
(3) In the above-described electrochemical cell, in the intermediate layer, the amount of Ce may be 10 at% to 70 at% relative to the total amount of Zr, Ce, the first rare earth element, and the second rare earth element. An excessively small amount of Ce in the intermediate layer may cause a large difference in amount of expansion between the anode and the intermediate layer in a reducing atmosphere, resulting in occurrence of microcracks at the interface between the anode and the intermediate layer. Meanwhile, an excessively large amount of Ce in the intermediate layer may cause a large difference in amount of expansion between the solid electrolyte layer and the intermediate layer in a reducing atmosphere, resulting in occurrence of microcracks at the interface between the solid electrolyte layer and the intermediate layer. According to the present electrochemical cell, an excessive decrease or increase in the amount of Ce can be prevented in the intermediate layer. Thus, occurrence of microcracks can be prevented at the interface between the anode and the intermediate layer or the interface between the solid electrolyte layer and the intermediate layer.
(4) In the above-described electrochemical cell, in the intermediate layer, the amount of Zr may be 10 at% to 70 at% relative to the total amount of Zr, Ce, the first rare earth element, and the second rare earth element. An excessively small amount of Zr in the intermediate layer may cause a large difference in amount of expansion between the solid electrolyte layer and the intermediate layer in a reducing atmosphere, resulting in occurrence of microcracks at the interface between the solid electrolyte layer and the intermediate layer. Meanwhile, an excessively large amount of Zr in the intermediate layer may cause a large difference in amount of expansion between the anode and the intermediate layer in a reducing atmosphere, resulting in occurrence of microcracks at the interface between the anode and the intermediate layer. According to the present electrochemical cell, an excessive decrease or increase in the amount of Zr can be prevented in the intermediate layer. Thus, occurrence of microcracks can be prevented at the interface between the solid electrolyte layer and the intermediate layer or the interface between the anode and the intermediate layer.
(5) In the above-described electrochemical cell, the intermediate layer may have a thickness of 10 µm or less. An excessively large thickness of the intermediate layer causes an increase in the resistance of the intermediate layer, resulting in impairment of the performance of the electrochemical cell. According to the present electrochemical cell, an excessive increase in the thickness of the intermediate layer can be avoided, to thereby prevent an increase in the resistance of the intermediate layer. Thus, impairment of the performance of the electrochemical cell, which would otherwise occur due to an increase in the resistance of the intermediate layer, can be prevented.
(6) In the above-described electrochemical cell, in the intermediate layer, the total amount of Zr and Ce may be 90 at% or less relative to the total amount of Zr, Ce, the first rare earth element, and the second rare earth element. An excessively large total amount of Zr and Ce in the intermediate layer leads to an excessively small amount of the rare earth elements contained in the intermediate layer. This causes a reduction in the ion conductivity of the intermediate layer, resulting in impairment of the performance of the electrochemical cell. According to the present electrochemical cell, an excessive increase in the total amount of Zr and Ce can be avoided in the intermediate layer. Thus, an excessive decrease in the amount of the rare earth elements contained in the intermediate layer can be avoided, to thereby prevent impairment of the performance of the electrochemical cell, which would otherwise occur due to a reduction in the ion conductivity of the intermediate layer.
(7) The above-described electrochemical cell may be a cell for a solid oxide fuel cell or a cell for a solid oxide electrolysis cell. The use of the present electrochemical cell as a cell for a solid oxide fuel cell or a solid oxide electrolysis cell can prevent impairment of the performance of the cell, which would otherwise occur due to a difference in amount of expansion between the solid electrolyte layer and the anode in a reducing atmosphere or due to elemental interdiffusion between the solid electrolyte layer and the anode.
(8) An electrochemical stack disclosed in the present specification comprises a plurality of electrochemical cells, wherein at least one of the electrochemical cells is the above-described electrochemical cell. According to the present electrochemical stack, there can be prevented impairment of the performance of at least one of the electrochemical cells, which would otherwise occur due to a difference in amount of expansion between the solid electrolyte layer and the anode in a reducing atmosphere or due to elemental interdiffusion between the solid electrolyte layer and the anode.
(9) The above-described electrochemical stack may be a solid oxide fuel cell stack or a solid oxide electrolysis cell stack. According to the present electrochemical stack, there can be prevented impairment of the performance of at least one of the electrochemical cells forming the solid oxide fuel cell stack or the solid oxide electrolysis cell stack, which would otherwise occur due to a difference in amount of expansion between the solid electrolyte layer and the anode in a reducing atmosphere or due to elemental interdiffusion between the solid electrolyte layer and the anode.

The technique disclosed in the present specification can be implemented in various modes; for example, an electrochemical cell, an electrochemical stack including a plurality of electrochemical cells (fuel cell stack or electrolysis cell stack), an electricity generation module including a fuel cell stack, a fuel cell system including an electricity generation module, a hydrogen generation module including an electrolysis cell stack, a hydrogen generation system including a hydrogen generation module, and a production method therefor.

### BRIEF DESCRIPTION OF THE DRAWINGS

[FIG. 1] Perspective view showing the external appearance of a fuel cell stack 100 according to the present embodiment.
[FIG. 2] Explanatory view showing a YZ section of the fuel cell stack 100 taken along line II-II of FIG. 1.
[FIG. 3] Explanatory view showing an XZ section of the fuel cell stack 100 taken along line III-III of FIG. 1.
[FIG. 4] Explanatory view showing the specific structure of a cell 110 according to the present embodiment.
[FIG. 5] Flowchart showing an exemplary production method for the cell 110 according to the present embodiment.
[FIG. 6] Explanatory view showing the results of performance evaluation.
[FIG. 7] Explanatory view showing a method of an electricity generation test.

### MODES FOR CARRYING OUT THE INVENTION

### A. Embodiment:

### A-1. Structure:

### (Structure of fuel cell stack 100)

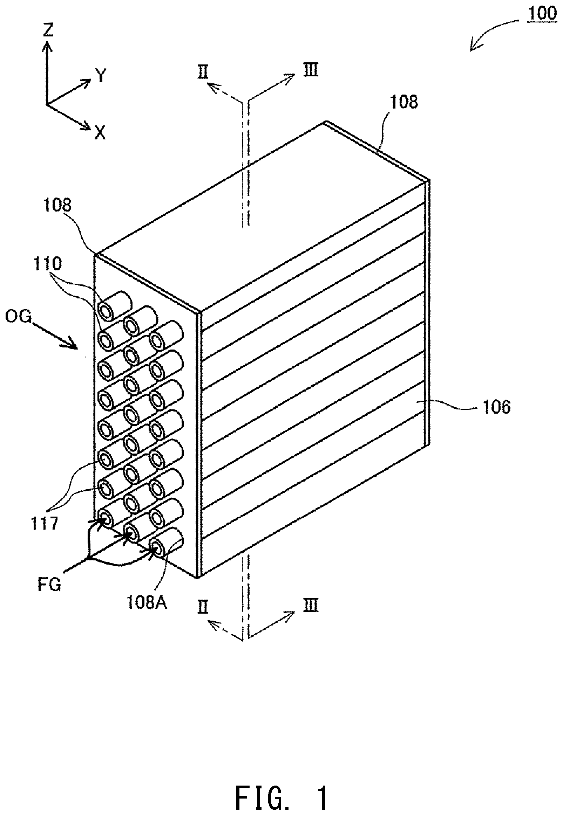

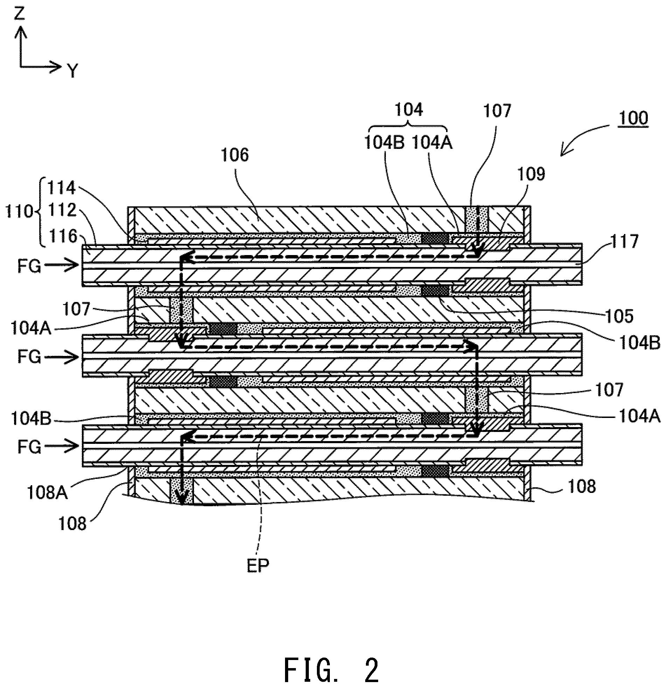

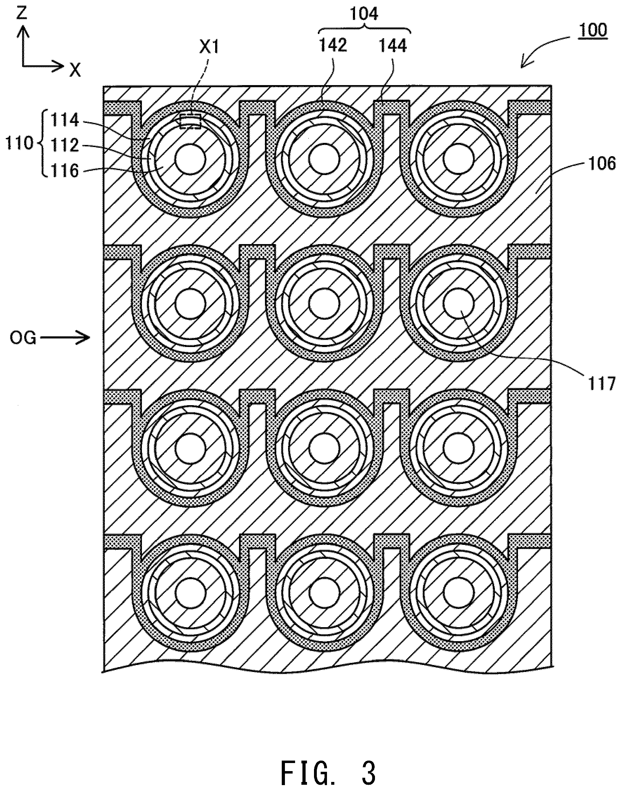

FIG. 1 is a perspective view showing the external appearance of a fuel cell stack 100 according to the present embodiment; FIG. 2 is an explanatory view showing a YZ section (partially omitted) of the fuel cell stack 100 taken along line II-II of FIG. 1; and FIG. 3 is an explanatory view showing an XZ section (partially omitted) of the fuel cell stack 100 taken along line III-III of FIG. 1. FIGS. 1 to 3 show mutually orthogonal X-axis, Y-axis, and Z-axis for specifying respective directions. In the present specification, for the sake of convenience, the positive Z-axis direction is called the "upward direction," the negative Z-axis direction is called the "downward direction," and the direction perpendicular to the Z-axis is called the "horizontal direction." However, in actuality, the fuel cell stack 100 may be disposed in a different orientation.

As shown in FIGS. 1 to 3, the fuel cell stack 100 includes a plurality (24 in the present embodiment) of cells 110, a plurality (eight in the present embodiment) of current collecting members 104, insulating porous bodies 106, and a pair of gas sealing members 108.

### (Structure of cell 110)

Each cell 110 is a tubular member. The 24 cells 110 included in the fuel cell stack 100 are disposed at intervals such that the axial direction of each cell 110 is approximately parallel with the Y-axis direction. Specifically, the 24 cells 110 are disposed such that three cells are arranged in the horizontal direction (X-axis direction) and eight cells are arranged in the vertical direction (Z-axis direction).

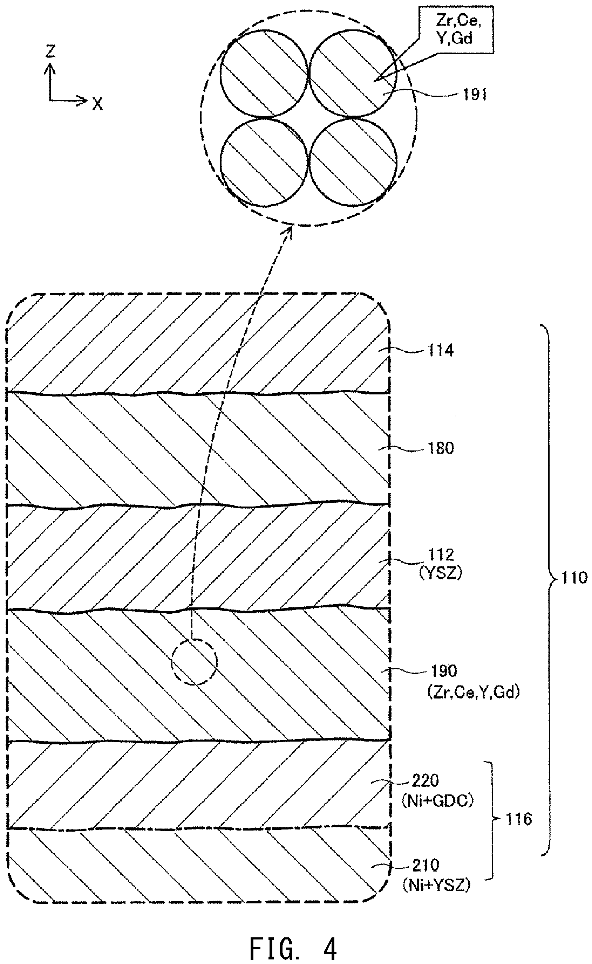

FIG. 4 is an explanatory view showing the specific structure of each cell 110 according to the present embodiment. FIG. 4 shows an enlarged view of a portion X1 of the XZ section of the cell 110 shown in FIG. 3. As shown in FIGS. 2 to 4, each cell 110 includes a solid electrolyte layer 112, a cathode layer (cathode) 114 disposed on one side of the solid electrolyte layer 112, and an anode layer (anode) 116 disposed on the other side of the solid electrolyte layer 112. Each cell 110 further includes a reaction preventing layer 180 disposed between the solid electrolyte layer 112 and the cathode layer 114, and an intermediate layer 190 disposed between the solid electrolyte layer 112 and the anode layer 116.

The anode layer 116 is an approximately cylindrical porous member. In the present embodiment, the anode layer 116 includes an anode substrate layer 210, and an anode active layer 220 that is located nearer to the solid electrolyte layer 112 than is the anode substrate layer 210. The anode active layer 220 mainly functions as a site of electrode reaction in the anode layer 116. The anode active layer 220 contains Ni (nickel) or an Ni-containing alloy and CeO₂ (ceria) containing a rare earth element. In the present embodiment, the anode active layer 220 is formed so as to contain Ni and Gd (gadolinium)-containing CeO₂ (hereinafter may be referred to as "GDC"). GDC has ion conductivity higher than that of, for example, Y (yttrium)-containing ZrO₂ (zirconia) (hereinafter may be referred to as "YSZ"). Thus, the use of GDC as a material forming the anode active layer 220 can improve the performance of the cell 110. The anode active layer 220 corresponds to the anode appearing in CLAIMS, and Gd corresponds to the second rare earth element appearing in CLAIMS.

The anode substrate layer 210 mainly supports the respective layers forming the cell 110. In the present embodiment, the anode substrate layer 210 is formed so as to contain Ni (or an Ni-containing alloy) and YSZ. Thus, the cell 110 of the present embodiment is an anode-support-type cell in which the anode layer 116 (anode substrate layer 210) supports the other layers of the cell 110.

The anode layer 116 (anode substrate layer 210) has a fuel gas conduction hole 117, which is a through hole extending in the axial direction (Y-axis direction) of the cell 110. A fuel gas FG is introduced into the fuel gas conduction hole 117 from the outside of the fuel cell stack 100.

The solid electrolyte layer 112 is an approximately cylindrical dense member disposed on the outer peripheral side of the anode layer 116 and is formed so as to contain a solid oxide. Thus, the cell 110 of the present embodiment is a solid oxide fuel cell (SOFC). In the present embodiment, the solid electrolyte layer 112 contains YSZ (Y-containing ZrO₂) as a solid oxide. Y (yttrium) corresponds to the first rare earth element appearing in CLAIMS.

The cathode layer 114 is an approximately cylindrical porous member disposed on the outer peripheral side of the solid electrolyte layer 112 and is formed so as to contain, for example, a perovskite oxide (e.g., LSCF (lanthanum strontium cobalt ferrite), LSM (lanthanum strontium manganese oxide), or LNF (lanthanum nickel ferrite)). The cathode layer 114 corresponds to the cathode appearing in CLAIMS.

The reaction preventing layer 180 is formed so as to contain, for example, GDC (Gd-containing CeO₂). The provision of the reaction preventing layer 180 can prevent generation of a substance of high resistance (e.g., SrZrO₃) through the reaction between an element (e.g., Sr (strontium)) contained in the cathode layer 114 and an element (e.g., Zr (zirconium)) contained in the solid electrolyte layer 112. As shown in FIG. 2, the cathode layer 114 and the reaction preventing layer 180 are not provided at both ends of the cell 110 in the axial direction; i.e., these layers are provided on a portion (exclusive of the both ends) of the cell 110. Thus, at the both ends of the cell 110, the solid electrolyte layer 112 is exposed without being covered with the cathode layer 114 and the reaction preventing layer 180.

As shown in FIG. 4, the intermediate layer 190 is formed so as to contain a solid solution (oxide solid solution) containing Zr, Ce (cerium), Y (i.e., the same rare earth element as that contained in the solid electrolyte layer 112), and Gd (i.e., the same rare earth element as that contained in the anode layer 116). Each grain 191 forming the solid solution contains the aforementioned elements (Zr, Ce, Y, and Gd). Notably, the fact that the intermediate layer 190 contains the solid solution can be verified by checking whether or not Zr, Ce, the first rare earth element, and the second rare earth element are detected at the same position through elemental analysis by, for example, electron probe microanalysis (hereinafter referred to as "EPMA").

As shown in FIG. 2, at one end of each cell 110 (i.e., an end at which the solid electrolyte layer 112 is exposed without being covered with, for example, the cathode layer 114), a portion of the anode layer 116 is covered with a metal sealing member 109 instead of, for example, the solid electrolyte layer 112. The metal sealing member 109 is a dense metal layer and functions as both a gas sealing member and a current collecting terminal of the anode layer 116. The end of one cell 110 (of two vertically adjacent cells 110) having the metal sealing member 109 is opposite the end of the other cell 110 having the metal sealing member 109.

### (Structure of another member)

Each current collecting member 104 is formed of an electrically conductive material having gas permeability. As shown in FIG. 3, each current collecting member 104 includes three cylindrical portions 142 each surrounding a cell 110, and a connection portion 144 that connects the cylindrical portions 142. Horizontally arranged three cells 110 are disposed within three cylindrical portions 142 of each current collecting member 104 such that the cells 110 are electrically connected to one another. Eight current collecting members 104 are arranged in the vertical direction such that the insulating porous body 106 is located between the current collecting members 104.

As shown in FIG. 2, each current collecting member 104 is divided into a first current collecting member 104A and a second current collecting member 104B in the Y-axis direction. The first current collecting member 104A and the second current collecting member 104B are electrically insulated from each other by an insulating member 105 disposed therebetween. The first current collecting member 104A is disposed on the outer peripheral side of a portion of each cell 110 having the metal sealing member 109, and the second current collecting member 104B is disposed on the outer peripheral side of a portion of the cell 110 having the cathode layer 114.

Each insulating porous body 106 is formed of a porous insulating material (e.g., a porous insulating ceramic material). As shown in FIG. 2, the insulating porous body 106 has vertically extending through holes at specific positions, and each through hole is filled with an electrically conductive member to thereby form an electrically conductive connection portion 107. The electrically conductive connection portion 107 electrically connects the second current collecting member 104B surrounding one cell 110 (of two vertically adjacent cells 110) to the first current collecting member 104A surrounding the other cell 110. Thus, an electrical conduction path EP is formed as shown by broken arrow lines in FIG. 2. The electrical conduction path EP extends from the anode layer 116 of a first cell 110 through the cathode layer 114 thereof, extends through the second current collecting member 104B surrounding the first cell 110 and an electrically conductive connection portion 107, extends through the first current collecting member 104A and the metal sealing member 109 surrounding a second cell 110 that is upwardly or downwardly adjacent to the first cell 110, and reaches the anode layer 116 of the second cell 110.

The paired gas sealing members 108 are insulating plate-like members and are formed of, for example, glass. The gas sealing members 108 have a plurality of through holes 108A. One of the gas sealing members 108 is disposed near first ends of the cells 110 located at one side in the axial direction (Y-axis direction), and first end portions of the cells 110 are inserted into the through holes 108A of the gas sealing member 108. The other gas sealing member 108 is disposed near second ends of the cells 110 located at the other side in the axial direction, and second end portions of the cells 110 are inserted into the through holes 108A of the gas sealing member 108. The paired gas sealing members 108 prevent leakage of gases flowing through the fuel cell stack 100.

### A-2. Operation of fuel cell stack 100:

As shown in FIGS. 1 and 2, when a hydrogen-containing fuel gas FG is supplied to the fuel cell stack 100, the fuel gas FG enters the fuel gas conduction hole 117 formed in the anode layer 116 of each cell 110. As shown in FIGS. 1 and 3, when an oxygen-containing oxidizer gas OG (e.g., air) is supplied to the fuel cell stack 100, the oxidizer gas OG permeates through the insulating porous body 106 and the current collecting member 104 and reaches the cathode layer 114 of each cell 110. When the fuel gas FG is supplied to the anode layer 116 of each cell 110, and the oxidizer gas OG is supplied to the cathode layer 114 of the cell 110, the cell 110 generates electricity through the electrochemical reaction between the oxidizer gas OG and the fuel gas FG. The cells 110 are electrically connected to one another by means of the current collecting member 104 and the aforementioned electrical conduction path EP, and non-illustrated terminal members are disposed on the top and bottom of the fuel cell stack 100. Electricity generated in each cell 110 is output to the outside via, for example, conductive wires connected to the negative and positive terminal members. A plurality of fuel cell stacks 100 can be arrayed in a predetermined direction to thereby form a fuel cell module.

### A-3. Production method for cell 110:

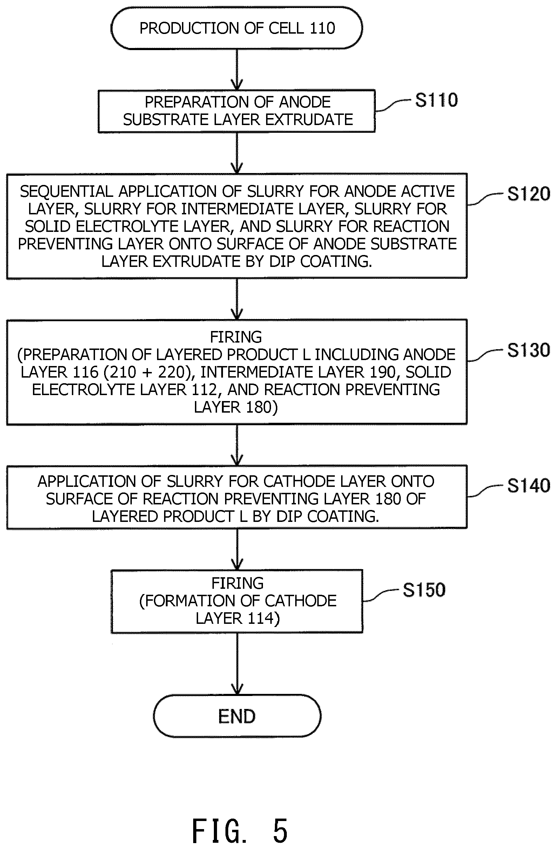

Next will be described a production method for the cell 110 having the aforementioned structure. FIG. 5 is a flowchart showing an exemplary production method for the cell 110 of the present embodiment.

Firstly, an anode substrate layer extrudate is prepared (S110). Specifically, a binder is added to and thoroughly mixed with a powder mixture of NiO (nickel oxide) and YSZ, and then water is added to the resultant mixture, to thereby yield a green body. The green body is added to an extruder and formed into an approximately cylindrical shape, to thereby prepare an anode substrate layer extrudate.

Subsequently, a slurry for anode active layer, a slurry for intermediate layer, a slurry for solid electrolyte layer, and a slurry for reaction preventing layer are sequentially applied by dip coating onto the outer peripheral surface of the anode substrate layer extrudate (S120). Specifically, a powder mixture of NiO and GDC, a binder, a dispersant, a plasticizer, and a solvent are mixed together, to thereby yield a slurry for anode active layer. A powder mixture of ZrO₂, CeO₂, Y₂O₃, and Gd₂O₃, a binder, a dispersant, a plasticizer, and a solvent are mixed together, to thereby yield a slurry for intermediate layer. YSZ powder, a binder, a dispersant, a plasticizer, and a solvent are mixed together, to thereby yield a slurry for solid electrolyte layer. GDC powder, a binder, a dispersant, a plasticizer, and a solvent are mixed together, to thereby yield a slurry for reaction preventing layer. The surface of the anode substrate layer extrudate is optionally masked. Thereafter, the anode substrate layer extrudate is immersed in the slurry for anode active layer and then slowly removed therefrom, to thereby apply the slurry for anode active layer onto the outer peripheral surface of the anode substrate layer extrudate. Similarly, the slurry for intermediate layer, the slurry for solid electrolyte layer, and the slurry for reaction preventing layer are sequentially applied to the extrudate.

Subsequently, the slurries-applied anode substrate layer extrudate is subjected to firing (co-firing) (S130). Through this firing step, the anode substrate layer extrudate becomes the anode substrate layer 210, the slurry for anode active layer becomes the anode active layer 220, the slurry for intermediate layer becomes the intermediate layer 190, the slurry for solid electrolyte layer becomes the solid electrolyte layer 112, and the slurry for reaction preventing layer becomes the reaction preventing layer 180. The aforementioned steps produce a layered product including the anode layer 116 (anode substrate layer 210 and anode active layer 220), the intermediate layer 190, the solid electrolyte layer 112, and the reaction preventing layer 180 (hereinafter the layered product will be referred to as "layered product L").

Subsequently, a slurry for cathode layer is applied by dip coating onto the surface of the reaction preventing layer 180 of the layered product L (S140). Specifically, for example, LSCF powder, a binder, a dispersant, a plasticizer, and a solvent are mixed together, to thereby yield a slurry for cathode layer. The surface of the layered product L is optionally masked. Thereafter, the layered product L is immersed in the slurry for cathode layer and then slowly removed therefrom, to thereby apply the slurry for cathode layer onto the surface of the reaction preventing layer 180 of the layered product L.

Subsequently, the layered product L onto which the slurry for cathode layer has been applied is fired (S150). Through this firing step, the slurry for cathode layer becomes the cathode layer 114. The aforementioned steps produce the cell 110; i.e., a layered product including the anode layer 116 (anode substrate layer 210 and anode active layer 220), the intermediate layer 190, the solid electrolyte layer 112, the reaction preventing layer 180, and the cathode layer 114.

### A-4. Effects of the present embodiment:

As described above, the cell 110 of the present embodiment includes the solid electrolyte layer 112 containing ZrO₂ containing the rare earth element (first rare earth element); the cathode layer 114 disposed on one side of the solid electrolyte layer 112; and the anode active layer 220 disposed on the other side of the solid electrolyte layer 112 and containing CeO₂ containing the rare earth element (second rare earth element) and Ni or an Ni-containing alloy. The cell 110 of the present embodiment further includes the intermediate layer 190 disposed between the solid electrolyte layer 112 and the anode active layer 220 and containing a solid solution containing Zr, Ce, the first rare earth element, and the second rare earth element.

Since the cell 110 of the present embodiment has the aforementioned structure, the amount of expansion of the intermediate layer 190 in a reducing atmosphere can be controlled to fall within a range between the amount of expansion of the anode active layer 220 and the amount of expansion of the solid electrolyte layer 112. This configuration can reduce the stress between the anode active layer 220 and the solid electrolyte layer 112 caused by a difference in amount of expansion therebetween in a reducing atmosphere, and can prevent separation between the anode active layer 220 and the solid electrolyte layer 112. Thus, the present embodiment can prevent impairment of the performance of the cell 110, which would otherwise occur due to the separation between the anode active layer 220 and the solid electrolyte layer 112.

In the cell 110 of the present embodiment, the intermediate layer 190 contains Zr, Ce, the aforementioned first rare earth element (i.e., the same rare earth element as that contained in the solid electrolyte layer 112), and the aforementioned second rare earth element (i.e., the same rare earth element as that contained in the anode active layer 220). Thus, the presence of the intermediate layer 190 can prevent elemental interdiffusion between the anode active layer 220 and the solid electrolyte layer 112. Therefore, the present embodiment can prevent impairment of the performance of the cell 110, which would otherwise occur due to poor properties caused by elemental interdiffusion between the anode active layer 220 and the solid electrolyte layer 112.

In the cell 110 of the present embodiment, the intermediate layer 190 does not contain a mixture of Zr (zirconium), Ce (cerium), the aforementioned first rare earth element, and the aforementioned second rare earth element, but contains a solid solution containing Zr, Ce, the first rare earth element, and the second rare earth element. Thus, in a reducing atmosphere, the difference in amount of expansion between grains forming the intermediate layer 190 can be reduced. Therefore, the cell 110 of the present embodiment can prevent occurrence of cracks caused by a difference in amount of expansion between grains forming the intermediate layer 190, to thereby prevent impairment of the performance of the cell 110, which would otherwise occur due to the cracks.

### A-5. Performance evaluation of cell 110:

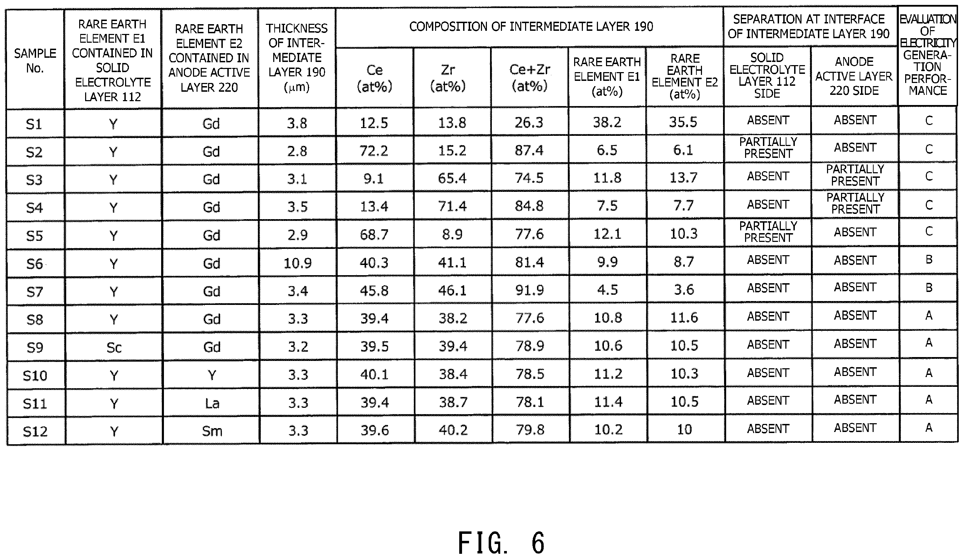

A plurality of samples of the cell 110 of the aforementioned embodiment were prepared, and the prepared samples of the cell 110 were used for performance evaluation. FIG. 6 is an explanatory view showing the results of the performance evaluation.

### A-5-1. Samples:

As shown in FIG. 6, the samples (S1 to S12) differ from one another in terms of the configurations of the solid electrolyte layer 112, the anode active layer 220, and the intermediate layer 190. Specifically, in samples S1 to S8 and S10 to S12, the solid electrolyte layer 112 is formed so as to contain YSZ, and in sample S9, the solid electrolyte layer 112 is formed so as to contain Sc (scandium)-containing ZrO₂ (hereinafter referred to as "ScSZ"). In the following description, the rare earth element contained in the solid electrolyte layer 112 will be referred to as "first rare earth element E1." The first rare earth element E1 is Y in samples S1 to S8 and S10 to S12, and the first rare earth element E1 is Sc in sample S9.

In samples S1 to S9, the anode active layer 220 is formed so as to contain GDC; in sample S10, the anode active layer 220 is formed so as to contain Y (yttrium)-containing CeO₂ (hereinafter referred to as "YDC"); in sample S11, the anode active layer 220 is formed so as to containing La (lanthanum)-containing CeO₂ (hereinafter referred to as "LDC"); and in sample S12, the anode active layer 220 is formed so as to contain Sm (samarium)-containing CeO₂ (hereinafter referred to as "SDC"). In the following description, the rare earth element contained in the anode active layer 220 will be referred to as "second rare earth element E2." The second rare earth element E2 is Gd in samples S1 to S9; the second rare earth element E2 is Y in sample S10; the second rare earth element E2 is La in sample S11; and the second rare earth element E2 is Sm in sample S12.

The intermediate layers 190 of the respective samples have different thicknesses. In each of the samples, the intermediate layer 190 contains Ce, Zr, the first rare earth element E1, and the second rare earth element E2. The intermediate layers 190 of the samples have different proportions (compositions) of these elements.

### (Sample preparation method)

The cell 110 of each sample was prepared by the production method described above in the embodiment. The preparation method for the cell 110 of each sample will next be described in detail.

Firstly, NiO powder and Y_{0.16}Zr_{0.84}O_{2-δ} (YSZ) powder were weighed and mixed together so that the ratio by volume (vol%) of Ni:YSZ was 50:50 after reduction of the anode substrate layer 210 of the prepared sample (cell 110), to thereby prepare a powder mixture of NiO and YSZ. The powder mixture was thoroughly mixed with a cellulose binder, and water was added to the mixture, to thereby prepare a green body. The green body was added to an extruder to thereby form a cylindrical anode substrate layer extrudate (outer diameter: 2.5 mm) .

NiO powder and Gd_{0.1}Ce_{0.9}O_{2-δ} (GDC) powder were weighed and mixed together so that the ratio by volume (vol%) of Ni:GDC was 50:50 after reduction of the anode active layer 220 of the prepare sample (cell 110), to thereby prepare a powder mixture of NiO and GDC. The powder mixture was mixed with polyvinyl butyral, an amine dispersant, a plasticizer, and solvents (methyl ethyl ketone and ethanol), to thereby prepare a slurry for anode active layer. In sample S10, a slurry for anode active layer was prepared in the same manner as described above, except that GDC powder was replaced with Y_{0.1}Ce_{0.9}O_{2-δ} (YDC) powder. In sample S11, a slurry for anode active layer was prepared in the same manner as described above, except that GDC powder was replaced with La_{0.1}Ce_{0.9}O_{2-δ} (LDC) powder. In sample S12, a slurry for anode active layer was prepared in the same manner as described above, except that GDC powder was replaced with Sm_{0.1}Ce_{0.9}O_{2-δ} (SDC) powder.

ZrO₂ powder, CeO₂ powder, Y₂O₃ powder, and Gd₂O₃ powder were mixed in appropriate proportions so as to achieve a predetermined composition for each sample. The resultant powder mixture was mixed with polyvinyl butyral, an amine dispersant, a plasticizer, and solvents (methyl ethyl ketone and ethanol), to thereby prepare a slurry for intermediate layer. In sample S9, a slurry for intermediate layer was prepared in the same manner as described above, except that Y₂O₃ powder was replaced with SC₂O₃ powder. In sample S10, a slurry for intermediate layer was prepared in the same manner as described above, except that a powder mixture of ZrO₂, CeO₂, and Y₂O₃ was used without addition of Gd₂O₃ powder. In sample S11, a slurry for intermediate layer was prepared in the same manner as described above, except that Gd₂O₃ powder was replaced with La₂O₃ powder. In sample S12, a slurry for intermediate layer was prepared in the same manner as described above, except that Gd₂O₃ powder was replaced with Sm₂O₃ powder.

YSZ powder was mixed with polyvinyl butyral, an amine dispersant, a plasticizer, and solvents (methyl ethyl ketone and ethanol), to thereby prepare a slurry for solid electrolyte layer. In sample S9, a slurry for solid electrolyte layer was prepared in the same manner as described above, except that YSZ powder was replaced with SC_{0.}16Zr_{0.84}O_{2-δ} (ScSZ) powder.

GDC powder was mixed with polyvinyl butyral, an amine dispersant, a plasticizer, and solvents (methyl ethyl ketone and ethanol), to thereby prepare a slurry for reaction preventing layer.

Subsequently, the slurry for anode active layer, the slurry for intermediate layer, the slurry for solid electrolyte layer, and the slurry for reaction preventing layer were sequentially applied by dip coating onto the outer peripheral surface of the anode substrate layer extrudate, followed by co-firing, to thereby prepare a layered product L including the anode layer 116 (anode substrate layer 210 and anode active layer 220), the intermediate layer 190, the solid electrolyte layer 112, and the reaction preventing layer 180.

La_{0.6}Sr_{0.4}CO_{0.}2Fe_{0.8}O_{3-δ} (LSCF) powder was mixed with polyvinyl butyral, an amine dispersant, a plasticizer, and solvents (methyl ethyl ketone and ethanol), to thereby prepare a slurry for cathode layer. The slurry for cathode layer was applied by dip coating onto the surface of the reaction preventing layer 180 of the layered product L, followed by firing, to thereby form the cathode layer 114. The cell 110 of each sample was produced through the aforementioned method.

### (Sample analysis method)

The resultant cell 110 of each sample was analyzed as follows.

Specifically, the cell 110 of each sample was cut into a piece having a predetermined length, and the cut piece was embedded in an epoxy resin, followed by solidification. Subsequently, the solidified product was cut so as to observe a cross section approximately parallel with the direction of stacking of the layers, and the cut surface was mirror-polished. Thereafter, the polished surface (observation surface) was subjected to carbon deposition, and then EPMA was used to acquire an image for specifying the intermediate layer 190 and to perform line analysis and quantitative analysis of elements.

The intermediate layer 190 was specified by use of the acquired image as follows. Specifically, in a region of the cell 110 probably including the intermediate layer 190 and the periphery of the region, a portion wherein Zr was detected but Ce was not detected by EPMA was defined as the solid electrolyte layer 112; a portion wherein Ni was detected by EPMA was defined as the anode layer 116 (anode active layer 220); and a portion between the solid electrolyte layer 112 and the anode layer 116 (anode active layer 220) was defined as the intermediate layer 190.

In a portion corresponding to the intermediate layer 190 of each sample, Zr and Ce were detected at the same position (rather than different positions). Thus, the intermediate layer 190 was found to contain a solid solution containing Zr and Ce.

### A-5-2. Evaluation method:

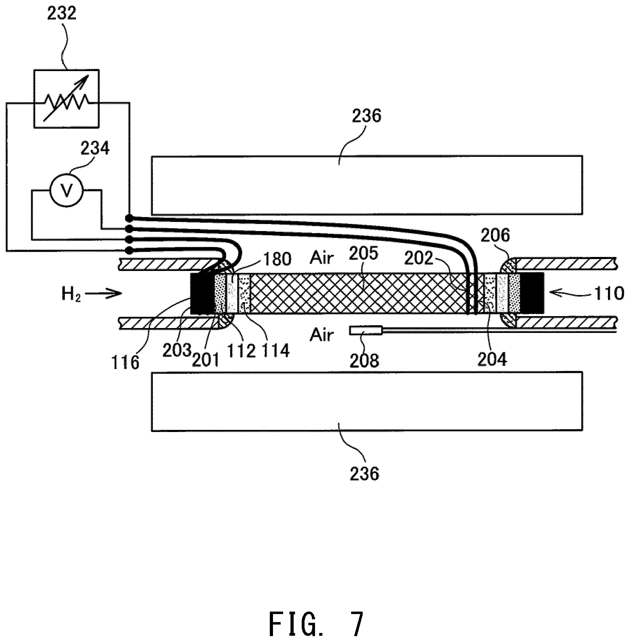

As shown in FIG. 7, in the above-prepared cell 110 of each sample, a first silver wire 201 and a third silver wire 203 were wound around a portion where the anode layer 116 was exposed, and a silver paste was applied to the portion, to thereby form an anode terminal. In the cell 110, a portion where the cathode layer 114 was formed was covered with a platinum mesh 205, and a second silver wire 202 and a fourth silver wire 204 were connected to the platinum mesh 205. An electrically conductive paste for current collection was applied onto the platinum mesh 205 and then fired by means of an electric furnace 236, to thereby form a cathode terminal. Exposed portions of the solid electrolyte layer 112 at both ends of the cell 110 were fixed with a glass material 206 for gas sealing.

Thereafter, the cell 110 was placed in the electric furnace 236. A voltmeter 234 was connected to the cell 110 via the first silver wire 201 and the second silver wire 202, and an impedance measuring device (S11287, 1255B, manufactured by Solartron) 232 was connected to the cell 110 via the third silver wire 203 and the fourth silver wire 204. In order to measure the temperature of the cell 110, a thermocouple 208 was set at a position 2 mm away from the outer surface of the cathode layer 114.

Nitrogen gas and air were continuously caused to flow on the anode layer 116 side and on the cathode layer 114 side, respectively, and the electric furnace 236 was heated to 800°C. Thereafter, the nitrogen gas on the anode layer 116 side was replaced with hydrogen gas (H₂), and the anode layer 116 was subjected to reduction treatment. After completion of the reduction treatment, the presence or absence of separation was determined at the interfaces of the intermediate layer 190 (i.e., the interface on the solid electrolyte layer 112 side and the interface on the anode active layer 220 side).

After completion of the reduction treatment, the temperature of the electric furnace 236 was lowered to 700°C, and the IV curve (current-voltage curve) of the cell 110 was measured at 700°C. The resultant IV curve was used to determine a voltage (V) at a current density of 0.5 A/cm². Rating "excellent (A)" was assigned when the voltage was 0.8 V or higher; rating "good (B)" was assigned when the voltage was 0.6 V or higher and lower than 0.8 V; rating "fair (C)" was assigned when the voltage was 0.4 V or higher and lower than 0.6 V; and rating "poor (D)" was assigned when the voltage was lower than 0.4 V.

### A-5-3. Evaluation results:

As shown in FIG. 6, complete separation did not occur at the interface between the intermediate layer 190 and the solid electrolyte layer 112 or the interface between the intermediate layer 190 and the anode active layer 220 in any of the samples (S1 to S12). As shown in the results of evaluation of electricity generation performance, all the samples (S1 to S12) exhibited rating "fair (C)" or higher; i.e., no sample exhibited rating "poor (D)." The results indicated that the employment of the structure of the cell 110 according to the aforementioned embodiment (i.e., the cell 110 including the solid electrolyte layer 112 containing ZrO₂ containing the first rare earth element E1; the cathode layer 114 disposed on one side of the solid electrolyte layer 112; the anode active layer 220 disposed on the other side of the solid electrolyte layer 112 and containing CeO₂ containing the second rare earth element E2 and Ni or an Ni-containing alloy; and the intermediate layer 190 disposed between the solid electrolyte layer 112 and the anode active layer 220 and containing a solid solution containing Zr, Ce, the first rare earth element E1, and the second rare earth element E2) can prevent separation between the anode active layer 220 and the solid electrolyte layer 112, and can prevent elemental interdiffusion between the anode active layer 220 and the solid electrolyte layer 112, to thereby prevent impairment of the performance of the cell 110.

Sample S1 exhibited rating "fair (C)" in terms of evaluation of electricity generation performance, which was lower as compared with samples S6 to S12 (all of them exhibited rating "good (B)" or higher). In sample S1, the total amount of Zr and Ce was 26.3 at% relative to the total amount of Zr, Ce, the first rare earth element E1, and the second rare earth element E2 in the intermediate layer 190, which was lower than that in each of samples S6 to S12 (wherein the total amount of Zr and Ce was 30 at% or more). Thus, in sample S1, the intermediate layer 190 failed to maintain a fluorite structure. This probably led to a reduction in the ion conductivity of the intermediate layer 190, resulting in impairment of the electricity generation performance of the cell 110. According to the results of evaluation of sample S1, in the intermediate layer 190, the total amount of Zr and Ce is preferably 30 at% or more relative to the total amount of Zr, Ce, the first rare earth element E1, and the second rare earth element E2. In the intermediate layer 190, the total amount of Zr and Ce is more preferably 60 at% or more, much more preferably 74.5 at% or more, relative to the total amount of Zr, Ce, the first rare earth element E1, and the second rare earth element E2.

Sample S2 exhibited rating "fair (C)" in terms of evaluation of electricity generation performance, which was lower as compared with samples S6 to S12 (all of them exhibited rating "good (B)" or higher). In sample S2, partial separation (microcracks) occurred at the interface between the intermediate layer 190 and the solid electrolyte layer 112. In sample S2, the amount of Ce was 72.2 at% relative to the total amount of Zr, Ce, the first rare earth element E1, and the second rare earth element E2 in the intermediate layer 190, which was higher than that in each of samples S6 to S12 (wherein the amount of Ce was 70 at% or less). Thus, in sample S2, a difference in amount of expansion increased between the solid electrolyte layer 112 and the intermediate layer 190 in a reducing atmosphere. This probably led to occurrence of microcracks at the interface therebetween, resulting in impairment of the electricity generation performance of the cell 110.

Sample S3 exhibited rating "fair (C)" in terms of evaluation of electricity generation performance, which was lower as compared with samples S6 to S12 (all of them exhibited rating "good (B)" or higher). In sample S3, partial separation (microcracks) occurred at the interface between the intermediate layer 190 and the anode active layer 220. In sample S3, the amount of Ce was 9.1 at% relative to the total amount of Zr, Ce, the first rare earth element E1, and the second rare earth element E2 in the intermediate layer 190, which was lower than that in each of samples S6 to S12 (wherein the amount of Ce was 10 at% or more). Thus, in sample S3, a difference in amount of expansion increased between the anode active layer 220 and the intermediate layer 190 in a reducing atmosphere. This probably led to occurrence of microcracks at the interface therebetween, resulting in impairment of the electricity generation performance of the cell 110.

According to the results of evaluation of samples S2 and S3, in the intermediate layer 190, the amount of Ce is preferably 10 at% to 70 at% relative to the total amount of Zr, Ce, the first rare earth element E1, and the second rare earth element E2. In the intermediate layer 190, the amount of Ce is more preferably 12.5 at% or more, much more preferably 30 at% or more, relative to the total amount of Zr, Ce, the first rare earth element E1, and the second rare earth element E2. In the intermediate layer 190, the amount of Ce is preferably 70 at% or less, more preferably 68.7 at% or less, relative to the total amount of Zr, Ce, the first rare earth element E1, and the second rare earth element E2.

Sample S4 exhibited rating "fair (C)" in terms of evaluation of electricity generation performance, which was lower as compared with samples S6 to S12 (all of them exhibited rating "good (B)" or higher). In sample S4, partial separation (microcracks) occurred at the interface between the intermediate layer 190 and the anode active layer 220. In sample S4, the amount of Zr was 71.4 at% relative to the total amount of Zr, Ce, the first rare earth element E1, and the second rare earth element E2 in the intermediate layer 190, which was higher than that in each of samples S6 to S12 (wherein the amount of Zr was 70 at% or less). Thus, in sample S4, a difference in amount of expansion increased between the anode active layer 220 and the intermediate layer 190 in a reducing atmosphere. This probably led to occurrence of microcracks at the interface therebetween, resulting in impairment of the electricity generation performance of the cell 110.

Sample S5 exhibited rating "fair (C)" in terms of evaluation of electricity generation performance, which was lower as compared with samples S6 to S12 (all of them exhibited rating "good (B)" or higher). In sample S5, partial separation (microcracks) occurred at the interface between the intermediate layer 190 and the solid electrolyte layer 112. In sample S5, the amount of Zr was 8.9 at% relative to the total amount of Zr, Ce, the first rare earth element E1, and the second rare earth element E2 in the intermediate layer 190, which was lower than that in each of samples S6 to S12 (wherein the amount of Zr was 10 at% or more). Thus, in sample S5, a difference in amount of expansion increased between the solid electrolyte layer 112 and the intermediate layer 190 in a reducing atmosphere. This probably led to occurrence of microcracks at the interface therebetween, resulting in impairment of the electricity generation performance of the cell 110.

According to the results of evaluation of samples S4 and S5, in the intermediate layer 190, the amount of Zr is preferably 10 at% to 70 at% relative to the total amount of Zr, Ce, the first rare earth element E1, and the second rare earth element E2. In the intermediate layer 190, the amount of Zr is more preferably 13.8 at% or more, much more preferably 30 at% or more, relative to the total amount of Zr, Ce, the first rare earth element E1, and the second rare earth element E2. In the intermediate layer 190, the amount of Zr is more preferably 70 at% or less, much more preferably 65.4 at% or less, relative to the total amount of Zr, Ce, the first rare earth element E1, and the second rare earth element E2.

Sample S6 exhibited rating "good (B)" in terms of evaluation of electricity generation performance, which was lower as compared with samples S8 to S12 (all of them exhibited rating "excellent (A)"). In sample S6, the intermediate layer 190 had a thickness of 10.9 µm, which was larger than that in each of samples S8 to S12 (wherein the intermediate layer 190 had a thickness of 10 µm or less). Thus, in sample S6, the resistance of the intermediate layer 190 probably increased, resulting in impairment of the electricity generation performance of the cell 110. According to the results of evaluation of sample S6, the thickness of the intermediate layer 190 is preferably 10 µm or less. The thickness of the intermediate layer 190 is more preferably 5 µm or less, much more preferably 3.8 µm or less.

Sample S7 exhibited rating "good (B)" in terms of evaluation of electricity generation performance, which was lower as compared with samples S8 to S12 (all of them exhibited rating "excellent (A)"). In sample S7, the total amount of Zr and Ce was 91.9 at% relative to the total amount of Zr, Ce, the first rare earth element E1, and the second rare earth element E2 in the intermediate layer 190, which was higher than that in each of samples S8 to S12 (wherein the total amount of Zr and Ce was 90 at% or less). Thus, in sample S7, the total amount of the rare earth elements (first rare earth element E1 and second rare earth element E2) contained in the intermediate layer 190 excessively decreased. This probably led to a reduction in the ion conductivity of the intermediate layer 190, resulting in impairment of the electricity generation performance of the cell 110. According to the results of evaluation of sample S7, in the intermediate layer 190, the total amount of Zr and Ce is preferably 90 at% or less relative to the total amount of Zr, Ce, the first rare earth element E1, and the second rare earth element E2. In the intermediate layer 190, the total amount of Zr and Ce is more preferably 87.4 at% or less relative to the total amount of Zr, Ce, the first rare earth element E1, and the second rare earth element E2.

Samples S8 to S12 exhibited rating "excellent (A)" in terms of evaluation of electricity generation performance. In samples S8 to S12, neither separation nor microcracks occurred at the interface between the intermediate layer 190 and the layer adjacent thereto. In samples S8 to S12, the total amount of Zr and Ce was 30 at% to 90 at% relative to the total amount of Zr, Ce, the first rare earth element E1, and the second rare earth element E2 in the intermediate layer 190; the amount of Ce was 10 at% to 70 at% relative to the total amount of Zr, Ce, the first rare earth element E1, and the second rare earth element E2 in the intermediate layer 190; the amount of Zr was 10 at% to 70 at% relative to the total amount of Zr, Ce, the first rare earth element E1, and the second rare earth element E2 in the intermediate layer 190; and the thickness of the intermediate layer 190 was 10 µm or less. Therefore, in samples S8 to S12, the intermediate layer 190 maintained a fluorite structure, and a reduction in the amount of the rare earth elements contained in the intermediate layer 190 was prevented. Consequently, a reduction in the ion conductivity of the intermediate layer 190 was prevented; a difference in amount of expansion decreased between the intermediate layer 190 and the solid electrolyte layer 112 or the anode active layer 220 in a reducing atmosphere; and an increase in the resistance of the intermediate layer 190 was prevented. This probably resulted in prevention of occurrence of separation or microcracks at the interface between the intermediate layer 190 and the layer adjacent thereto, and prevention of impairment of the electricity generation performance of the cell 110.

### B. Modifications:

The technique disclosed in the present specification is not limited to the above embodiment, but may be modified into various other forms without departing from the gist thereof. For example, the technique may be modified as described below.

The configuration of the fuel cell stack 100 in the above embodiment is a mere example, and may be modified into various forms. For example, in the above embodiment, the number of the cells 110 included in the fuel cell stack 100 is a mere example and is determined as appropriate in accordance with, for example, a required output voltage of the fuel cell stack 100. All the cells 110 included in the fuel cell stack 100 do not necessarily have the structure of the cell 110 described in the above embodiment. So long as at least one cell 110 included in the fuel cell stack 100 has the structure of the cell 110 described in the above embodiment, the aforementioned effects can be obtained. In the above embodiment, the fuel cell stack 100 includes a plurality of arranged cylindrical cells 110. The present invention is also applicable to a cell having another shape (e.g., a flat-plate shape) or a fuel cell stack including a plurality of arranged cells having such a shape.

In the above embodiment, the reaction preventing layer 180 is disposed between the solid electrolyte layer 112 and the cathode layer 114 in each cell 110. However, the reaction preventing layer 180 is not necessarily provided.

In the above embodiment, materials used for forming the members are provided merely by way of example. Other materials may be used for forming the members. For example, the rare earth element (first rare earth element) contained in the solid electrolyte layer 112 is Y in the above embodiment, but may be another element (e.g., Sc or Ca). Similarly, the rare earth element (second rare earth element) contained in the anode active layer 220 is Gd in the above embodiment, but may be another element (e.g., Y, La, or Sm). The rare earth element (first rare earth element) contained in the solid electrolyte layer 112 may be different from or identical to the rare earth element (second rare earth element) contained in the anode active layer 220.

In the above embodiment, the anode substrate layer 210 is formed so as to contain Ni or an Ni-containing alloy and YSZ. However, the anode substrate layer 210 may be formed so as to contain another ion conductive oxide (e.g., GDC) instead of (or in addition to) YSZ.

In the above embodiment, the anode layer 116 of each cell 110 has a two-layer structure including the anode substrate layer 210 and the anode active layer 220. However, the anode layer 116 may have a structure including a single layer or three or more layers. No particular limitation is imposed on the number of layers forming the anode layer 116, so long as the layer of the anode layer 116 nearest to the solid electrolyte layer 112 contains CeO₂ containing the rare earth element (second rare earth element) and Ni or an Ni-containing alloy. The layer nearest to the solid electrolyte layer 112 corresponds to the anode appearing in CLAIMS.

The above embodiment refers to an SOFC for generating electricity by utilizing the electrochemical reaction between hydrogen contained in a fuel gas and oxygen contained in an oxidizer gas; however, the present invention is also applicable to a solid oxide electrolysis cell (SOEC) for generating hydrogen by utilizing the electrolysis of water, and to an electrolysis cell stack including a plurality of electrolysis cells. Since the structure of the electrolysis cell stack is publicly known as described in, for example, Japanese Patent Application Laid-Open (*kokai*) No. 2016-81813, detailed description of the structure is omitted. Schematically, the electrolysis cell stack has a structure similar to that of the fuel cell stack 100 in the above embodiment. That is, the fuel cell stack 100 in the above embodiment may be read as "electrolysis cell stack," and the cell 110 may be read as "electrolysis cell." However, in operation of the electrolysis cell stack, voltage is applied between the cathode layer 114 and the anode layer 116 such that the cathode layer 114 serves as a positive electrode, whereas the anode layer 116 serves as a negative electrode. Thus, the electrolysis of water occurs in the electrolysis cells, whereby hydrogen gas is generated in the anode layers 116, and hydrogen is discharged to the outside of the electrolysis cell stack. In the aforementioned electrolysis cell and the electrolysis cell stack, if the electrolysis cell has the same structure as that of the cell 110 described above in the embodiment, the effects similar to those described in the above embodiment can be obtained.

### DESCRIPTION OF REFERENCE NUMERALS

100: fuel cell stack; 104A: first current collecting member; 104B: second current collecting member; 105: insulating member; 106: insulating porous body; 107: electrically conductive connection portion; 108: gas sealing member; 108A: through hole; 109: metal sealing member; 110: cell; 112: solid electrolyte layer; 114: cathode layer; 116: anode layer; 117: fuel gas conduction hole; 142: cylindrical portion; 144: connection portion; 180: reaction preventing layer; 190: intermediate layer; 191: grain; 201: first silver wire; 202: second silver wire; 203: third silver wire; 204: fourth silver wire; 205: platinum mesh; 206: glass material; 208: thermocouple; 210: anode substrate layer; 220: anode active layer; 232: impedance measuring device; 234: voltmeter; and 236: electric furnace

## Claims

1. An electrochemical cell comprising:
a solid electrolyte layer containing ZrO₂ containing a first rare earth element;
a cathode disposed on one side of the solid electrolyte layer; and
an anode disposed on the other side of the solid electrolyte layer and containing CeO₂ containing a second rare earth element and Ni or an Ni-containing alloy, the electrochemical cell being **characterized by** further comprising:
an intermediate layer disposed between the solid electrolyte layer and the anode and containing a solid solution containing Zr, Ce, the first rare earth element, and the second rare earth element.

2. An electrochemical cell according to claim 1, wherein, in the intermediate layer, the total amount of Zr and Ce is 30 at% or more relative to the total amount of Zr, Ce, the first rare earth element, and the second rare earth element.

3. An electrochemical cell according to claim 1 or 2, wherein, in the intermediate layer, the amount of Ce is 10 at% to 70 at% relative to the total amount of Zr, Ce, the first rare earth element, and the second rare earth element.

4. An electrochemical cell according to any one of claims 1 to 3, wherein, in the intermediate layer, the amount of Zr is 10 at% to 70 at% relative to the total amount of Zr, Ce, the first rare earth element, and the second rare earth element.

5. An electrochemical cell according to any one of claims 1 to 4, wherein the intermediate layer has a thickness of 10 µm or less.

6. An electrochemical cell according to any one of claims 1 to 5, wherein, in the intermediate layer, the total amount of Zr and Ce is 90 at% or less relative to the total amount of Zr, Ce, the first rare earth element, and the second rare earth element.

7. An electrochemical cell according to any one of claims 1 to 6, wherein the electrochemical cell is a cell for a solid oxide fuel cell or a cell for a solid oxide electrolysis cell.

8. An electrochemical stack comprising a plurality of electrochemical cells, the electrochemical stack being **characterized in that**:
at least one of the electrochemical cells is an electrochemical cell as recited in any one of claims 1 to 7.

9. An electrochemical stack according to claim 8, wherein the electrochemical stack is a solid oxide fuel cell stack or a solid oxide electrolysis cell stack.
